# EUROPÄISCHE PATENTSCHRIFT

(11) **EP 0 954 937 B1**
(45) Veröffentlichungstag und Bekanntmachung des Hinweises auf die Patenterteilung: **17.07.2002**
(21) Anmeldenummer: 98907839.9
(22) Anmeldetag: 21.01.1998
(51) Int. Cl.: H04Q 7/22, H04M 3/42

(54) **VERFAHREN ZUR ADMINISTRIERUNG ZUSÄTZLICHER DIENSTE IN EINEM KOMMUNIKATIONSNETZ**
METHOD FOR ADMINISTERING ADDITIONAL SERVICES IN A COMMUNICATION NETWORK
PROCEDE D'ADMINISTRATION DE SERVICES SUPPLEMENTAIRES DANS UN RESEAU DE COMMUNICATION

(30) Priorität: 23.01.1997 DE 19702322
(43) Veröffentlichungstag der Anmeldung: 10.11.1999
(73) Patentinhaber: SIEMENS AKTIENGESELLSCHAFT, 80333 München (DE)
(72) Erfinder: BECHER, Reinhard, D-81245 München (DE); LEITGEB, Manfred, A-2440 Gramatneusiedl (AT)
(86) Internationale Anmeldenummer: DE9800177
(87) Internationale Veröffentlichungsnummer: WO9833342

(56) Entgegenhaltungen:
- WO-A-94/10813
- WO-A-94/10814
- WO-A-96/04754
- WO-A-96/20572
- US-A- 5 517 563

## Beschreibung

Die Erfindung betrifft ein Verfahren zur Administrierung zusätzlicher Dienste in einem Kommunikationsnetz, eine für dieses verfahren ausgestaltete Dienstesteuerungseinheit bzw. Dienstevermittlungseinheit, wobei die zusätzlichen Dienste gemäß einer intelligenten Netzstruktur nutzbar sind.

Kommunikationsnetze sind als Festnetze oder Mobilkommunikationssysteme, wie das bekannte GSM-Mobilfunknetz (Global System for Mobile Communications) ausgebildet und weisen untereinander vernetzte Vermittlungseinrichtungen auf. In Mobilfunknetzen sind an die Vermittlungseinrichtungen jeweils Basisstationen angeschlossen, mit deren Hilfe über eine Luftschnittstelle Kommunikationsendgeräte anschließbar sind. Diese Kommunikationsendgeräte ermöglichen einem Teilnehmer dieses mobilen Kommunikationssystems den Netzzugang. Die Vermittlungseinrichtungen bewirken weiterhin den Übergang zu weiteren Netzen, z.B. Datenübertragungsnetzen oder einem Festnetz.

Aus dem GSM-Mobilfunknetz ist es weiterhin bekannt, Speichereinheiten, in denen jeweils teilnehmerspezifische Daten zu den netzeigenen Diensten gespeichert sind, zu verwenden Eine dieser Speichereinheiten realisiert das sogenannte Heiatregister, das sich in der Regel an einem fest definierten Ort befindet und in dem die der Registrierung des Teilnehmers zugrundeliegenden Daten abgelegt sind. Für den momentanen Aufenthaltsort des mobilen Teilnehmers ist eine Speichereinheit als sogenanntes Besucherregister vorgesehen. Je nach Aufenthaltsort des mobilen Teilnehmers ändert sich auch die Speichereinheit für das Besucherregister, in dem sich die für diesen Teilnehmer spezifischen Daten befinden.

Die von der Erfindung betroffenen zusätzlichen Dienste sollen gemäß einer intelligenten Netztopologie durch unabhängige Dienstesteuerungseinheiten realisiert werden. Diese Dienstesteuerungseinheiten und die darin abgelegten Profile der zusätzlichen Dienste, einschließlich der zu ihrer Realisierung notwendigen Informationen, sind damit unabhängig vom mobilen Kommunikationsnetz änderbar. Aus der deutschen Patentanmeldung P 44 42 305 ist es bekannt, daß die in einem intelligenten Netz nutzbaren Dienste in einer Dienstevermittlungseinheit angestoßen werden, um einen Ausstieg aus der üblichen Anrufverarbeitung zu bewirken und damit einen Zugriff zu zusätzlichen Diensten zu aktivieren. Solche Dienstevermittlungseinheiten sind in der Regel in den Vermittlungseinrichtungen realisiert.

Es ist allgemein bekannt, eine Dienstekennung als teilnehmerindividuelles Teilnehmerdatum in der jeweiligen Teilnehmerdatenbasis vorzusehen und durch Auswerten dieser Dienstekennung während der Anrufbehandlung bei einem ankommenden oder abgehenden Anruf eine Verzweigung zu einer in einer Teilnehmerdatenbasis des intelligenten Netzes angegebenen Dienstesteuerungseinheit auszulösen.

Weiterhin ist aus "The CAMEL feature, proposed revisions to the stage 1 description", von ETSI/STC/SMG1. 14.03.95, GSM 02.78, Version 0.4.0, Seiten 1-14, eine sogenannte CAMEL (Customized Application for Mobil network Enhanced Logic) Plattform bekannt, mit der die Unterstützung von zusätzlichen anbieterspezifischen Diensten für Teilnehmer ermöglicht werden soll. Damit kann auch über die Netz- und Dienstegrenzen eines Kommunikationsnetzes hinweg ein betreiberspezifischer zusätzlicher Dienst genutzt werden. Dies ist möglich, wenn die den zusätzlichen Dienst anstoßende Dienstevermittlungseinheit für den angeforderten Dienst das benötigte Protokoll (CAP - CAMEL application part) verarbeiten kann und über die Netzgrenzen hinweg Signalisierungsmeldungen von und zum Heimatregister und zur Dienstesteuerungseinheit des zusätzlichen Dienstes ausgetauscht werden können.

Eine Voraussetzung für das Nutzen des zusätzlichen Dienstes für einen Teilnehmer ist es, daß die Dienstevermittlungseinheit, mit der der Teilnehmer verbunden ist, diesen zusätzlichen Dienst mit dem entsprechenden Protokoll unterstützen kann. Das flächendeckende Anbieten des zusätzlichen Dienstes erfordert somit ein Umrüsten aller Dienstevermittlungseinheiten und einen Signalisierungsmeldungsaustausch zur Auswahl eines der entsprechenden Protokolle.

Der Erfindung liegt die Aufgabe zugrunde, bei geringem Nachrüstaufwand die zusätzlichen Dienste einer größeren Anzahl von Nutzern zugänglich zu machen. Diese Aufgabe wird durch das Verfahren mit den Merkmalen von Patentanspruch 1, die Dienstesteuerungeinheit mit den Merkmalen von Patentanspruch 16 und die Dienstevermittlungseinheit mit den Merkmalen von Patentanspruch 17 gelöst. Vorteilhafte Weiterbildungen sind den Unteransprüchen zu entnehmen.

Das erfindungsgemäße Verfahren zur Administrierung zusätzlicher Dienste sieht vor, daß von einer ersten, einem Teilnehmer bedienenden Dienstevermittlungseinheit eine initiierende Nachricht an eine dem zusätzlichen Dienst zugeordnete Dienstesteuerungseinheit gesendet wird. In dieser Dienstesteuerungseinheit findet daraufhin ein Vergleich von einem durch die erste Dienstevermittlungseinheit unterstützten Protokoll mit einem für den zusätzlichen Dienst notwendigen Protokoll statt. Abhängig vom Vergleichsergebnis, d.h. wenn das durch die erste Dienstevermittlungseinheit unterstützte Protokoll nicht ausreichend zur Unterstützung des zusätzlichen Dienstes ist, wird eine zweite Dienstevermittlungseinheit bestimmt, die das für den zusätzlichen Dienst notwendige Protokoll unterstützt. Zu dieser zweiten Dienstevermittlungseinheit wird in Folge ein Rerouting eingeleitet.

Neue zusätzliche Dienste können gemäß dem erfindungsgemäßen Verfahren zuerst in nur einer Dienstevermittlungseinheit eingeführt und trotzdem im gesamten Netz und in fremden Netzen, die eine CAMEL Phase 1 unterstützen, angeboten werden. Damit verringert sich der Aufwand zum Einführen von zusätzlichen Diensten erheblich. Auch ein Test eines neuen zusätzlichen Dienstes ist durch diese Vorgehensweise wesentlich einfacher durchführbar.

Das erfindungsgemäße Verfahren kann angewendet werden, wenn der rufende Teilnehmer oder der gerufene Teilnehmer einen zusätzlichen Dienst nutzt, welcher von einer Dienstesteuerungseinheit unterstützt wird . Ebenso ist es anwendbar, wenn die erste Dienstevermittlungseinheit durch eine Rufweiterleitung ausgewählt wurde. Durch die Verwaltung der Einträge über die in den einzelnen Dienstevermittlungseinheiten verfügbaren Protokolle allein in einer oder mehreren Dienstesteuerungseinheiten ist ein einfache Wartung und Änderung der Einträge möglich. Die Dienstevermittlungseinheiten müssen nicht in gleichem Maße angepaßt werden.

Es sind damit auch nicht standardisierte Protokolle, z.B. ETSI Core INAP und netzspezifische Varianten für Mobilfunknetze (z.B. TELECOM INAP), oder unterschiedliche CAP (CAMEL application part) Versionen verwendbar, die sowohl im eigenen Netz des für den zusätzlichen Dienst registrierten Teilnehmers, als auch in einem Fremdnetz unterstützt werden, falls nur eine einzige oder einige wenige Dienstevermittlungseinheiten dieses spezielle Protokoll unterstützen. Für roamende Teilnehmer ist die notwendige Voraussetzung die Unterstützung von CAP phase 1 durch die jeweilige Dienstevermittlungseinheit.

Entsprechend einer vorteilhaften Ausgestaltung der Erfindung sind Angaben über das für den zusätzlichen Dienst benötigte Protokoll in der Dienstesteuerungseinheit gespeichert, anhand derer die zweite Dienstevermittlungseinheit ausgewählt wird.

Damit reduziert sich der Signalisierungsaufwand und eine leichte Änderbarkeit der Einträge über die Protokolle ist gegeben. Vorteilhafterweise sind in der Dienstesteuerungseinheit weiterhin Angaben über mehrere Dienstevermittlungseinheiten gespeichert, die die dort zur Verfügung stehenden Protokolle und weitere Attribute bezeichnen. Auch damit wird der Signalisierungsaufwand zwischen der Dienstesteuerungseinheit und den Dienstevermittlungseinheiten reduziert.

Gemäß einer weiteren vorteilhaften Ausgestaltung der Erfindung wird als zweite Dienstevermittlungseinheit eine Dienstevermittlungseinheit ausgewählt, die in einem bestimmten Verhältnis zur ersten Dienstevermittlungseinheit steht. Besteht eine Auswahlmöglichkeit zwischen mehreren Dienstevermittlungseinheiten, dann kann unter Kenntnis der ersten Dienstevermittlungseinheit eine zweckmäßige Auswahl getroffen werden.

Vorteilhafterweise wird zur Auswahl der zweiten Dienstevermittlungseinheit ein Diensteschlüssel (Service Key) für den zusätzlichen Dienst und eine Adresse der ersten Dienstevermittlungseinheit benutzt, so daß mit Hilfe einer Tabelle eine zweite Dienstevermittlungseinheit bestimmt wird, die der ersten Dienstevermittlungseinheit nahe liegt. Alternativ zu entfernungsgemäßen Kriterien können Kosten- und Aufwandsbetrachtungen oder die speziellen Vereinbarungen zwischen den Betreibern verschiedener Kommunikationsnetze herangezogen werden.

Sind auch Angaben über eine kommunikationsnetzspezifische Adresse der zweiten Dienstevermittlungseinheit (z.B. eine E.164 Adresse im GSM-Mobilfunksystem) enthalten, kann eine weitere Umrechnung von einer Bezeichnung des Dienstes zu einer Adresse der Dienstesteuerungseinheit entfallen.

Die Verbindung zwischen der ersten Dienstevermittlungseinheit und der Dienstesteuerungseinheit wird vorteilhafterweise nach dem Vergleich abgebaut, um den Vermittlungsaufwand im Netz zu senken. Die während des Dialoges von der ersten Dienstevermittlungseinheit empfangenen Daten werden in der Dienstesteuerungseinheit zwischengespeichert und mit einer Korrelationsinformation versehen, um beim Aufbau der Kommunikation zwischen der zweiten Dienstevermittlungseinheit und der Dienstesteuerungseinheit die zwischengespeicherten Daten wieder zur Verfügung zu haben.

Eine weitere Ausgestaltung der Erfindung sieht vor, daß für das Rerouting eine Routingadresse erstellt wird, die eine Adresse der zweiten Dienstevermittlungseinheit, einen Indikator für das Rerouting des zusätzlichen Dienstes, eine Adresse der Dienstesteuerungseinheit, und einen Protokollindikator enthält. Damit wird der sofortige Verbindungsaufbau zwischen der zweiten Dienstevermittlungseinheit und der Dienstesteuerungseinheit vereinfacht.

Gemäß einer weiteren vorteilhaften Ausgestaltung der Erfindung werden in der Dienstesteuerungseinheit Angaben zu dem vom Teilnehmer angeforderten zusätzlichen Dienst gespeichert, die durch eine Korrelationsinformation bezeichnet sind. Die Korrelationsinformation wird als Teil der Reroutingadresse übertragen, so daß beim Verbindungsaufbau zwischen der zweiten Dienstevermittlungseinheit und der Dienstesteuerungseinheit eine Zuordnung dieser Verbindung mit dem zusätzlichen Dienst und dem zu ihm gespeicherten Angaben möglich ist. In der Dienstesteuerungseinheit ist vorteilhafterwiese eine Zeitschaltung enthalten, die für eine vorgebbare Zeitdauer den Verbindungsaufbau mit der zweiten Dienstevermittlungseinheit erwartet. Wird diese Zeitdauer überschritten, dann werden die zwischengespeicherten Angaben gelöscht. Diese Maßnahmen dient dazu, die Ressourcen im Fehlerfall nicht unnötig zu binden.

Eine dezentrale Einführung von erweiterten Möglichkeiten für zusätzliche Dienste wird alternativ dadurch ermöglicht, daß in einer Dienstevermittlungseinheit anhand eines Servicekeyss (Diensteschlüssels) und einer Adresse einer für den zusätzlichen Dienst vorgesehenen Dienstesteuerungseinheit ein Protokoll für eine Signalisierung zur Dienstesteuerungseinheit ausgewählt wird. Diese Informationen sind in der in CAMEL phase 1 definierten CAMEL subscriber information (CSI) enthalten. Die CSI (O_CSI; T_CSI) wird bei Bedarf von Heimatregister zur Vermittlungseinrichtung des Netzübergangs bzw. zum Besucherregister gesendet. Damit müssen die Registersätze von Heimatregister nicht um Einträge zur Protokollauswahl erweitert werden. Es entfällt auch ein großer Signalisierungsaufwand, der bei Verhandlungen über das zu verwendende Protokoll zwischen der Dienstevermittlungseinheit und der Dienstesteuerungseinheit entsteht. Die Dienstevermittlungseinheiten können zur Unterstützung zusätzlicher Dienste mit den entsprechenden Protokollen Schritt für Schritt nachgerüstet werden.

Das erfindungsgemäße Verfahren eröffnet auch die Möglichkeit des schnellen und einfachen Anbietens neuer zusätzlicher Dienste, wenn die erste und zweite Dienstevermittlungseinheit unterschiedlichen Kommunikationsnetzen angehören. Durch entsprechende Übereinkommen unter den Netzbetreibern sind damit mit geringen Aufwand neue Dienste für eine große Anzahl von Teilnehmern verfügbar. Dies ermöglicht auch die Spezialisierung einzelner Kommunikationsnetze auf bestimmte zusätzliche Dienste.

Ist das Kommunikationsnetz als Mobilfunknetz, beispielsweise ein GSM, PCS1900, AMPS, DAMPS oder ein in UMTS, FPLMTS, CTM definiertes Mobilkommunikationssystem, ausgebildet, dann kann ein zusätzlicher Dienst, für den der Teilnehmer registriert ist, auch genutzt werden, wenn der Teilnehmer das eigene Netz verläßt und sich im Bereich von Netzen aufhält, mit deren Betreibern entsprechende Verträge bestehen. Hierbei kann der Dienst, welcher zur Abwicklung ein über CAMEL phase 1 hinausgehendes Protokoll benötigt, bei entsprechenden Abkommen auch in fremden Netzen direkt unterstützt werden. Sollte kein Abkommen mit dem fremden Betreiber bestehen, so kann der Dienst benutzt werden, indem ein Rerouting zu einer Dienstevermittlungseinheit im Heimatnetz des Teilnehmers durchgeführt wird. Diese breite Verfügbarkeit eines zusätzlichen Dienstes ist wichtig für Vermarktung des Dienstes und eine schnelle Akzeptanz unter den Teilnehmern.

Anhand von zeichnerischen Darstellungen soll der Erfindungsgegenstand im folgenden näher erläutert werden.

Dabei zeigen
- FIG 1: ein Mobilfunksystem,
- FIG 2-4: eine schematische Darstellung der am erfindungsgemäßen Verfahren beteiligten Einrichtungen nach einem ersten, zweiten und dritten Ausführungsbeispiel,
- FIG 5: eine beispielhafte Zusammensetzung einer Rerouting Information,
- FIG 6: beispielhafte Signalisierungsabläufe nach dem erfindungsgemäßen Verfahren
a) abgehender Ruf
b) ankommender Ruf,
- FIG 7: eine Tabelle der Einträge zu den Dienstevermittlungseinheiten in einer Dienstesteuerungseinheit, und
- FIG 8: eine Tabelle der Einträge zu den zum Unterstützen eines zusätzlichen Dienstes in Zusammenwirken mit einer Dienstesteuerungseinheit benötigten Protokollen in einer Dienstevermittlungseinheit.

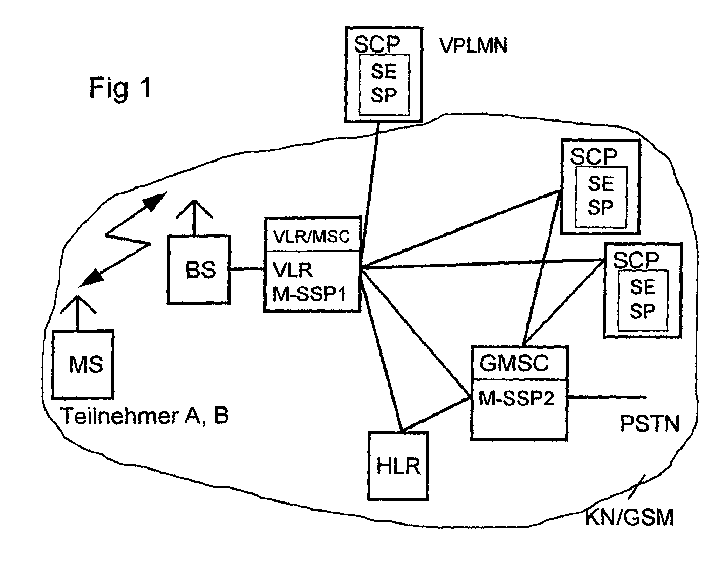

Das Kommunikationsnetz KN nach FIG 1 ist beispielsweise als GSM-Mobilfunknetz GSM ausgestaltet. Dazu enthält es Vermittlungseinrichtungen VLR/MSC, GMSC, die miteinander verbunden sind. Eine Vermittlungseinrichtung VLR/MSC stellt die Verbindung zu einem mobilen Teilnehmer über eine Basisstation BS, die mit der Vermittlungseinrichtung VLR/MSC drahtgebunden verbunden ist, und über eine Luftschnittstelle zwischen Basisstation BS und einer Mobilstation MS her. Die Mobilstation MS ist das Kommunikationsendgerät des mobilen Teilnehmers A, B.

Eine weitere Vermittlungseinrichtung GMSC bildet den Netzübergang in ein weiteres Netz, z.B. ein Festnetz PSTN. Weiterhin enthält das mobile Kommunikationsnetz GSM Dienstesteuerungseinheiten SCP (werden nach CAMEL phase 1 auch als CSE - CAMEL service environment bezeichnet), die jeweils mit zumindest einer Vermittlungseinrichtung VLR/MSC, GMSC verbunden sind. Bei diesen Verbindungen ist es nicht notwendig, daß jede Dienstesteuerungseinheit SCP mit jeder Vermittlungseinrichtung VLR/MSC, GMSC direkt verbunden ist, es genügt wenn diese über das Kommunikationsnetz GSM odere andere Netze PSTN über eine #7 Signalisierung erreichbar sind.

Nach FIG 1 ist eine Speichereinheit HLR als Heimatregister des mobilen Teilnehmers A,B eine eigenständige Einheit, die mit beiden hier beispielhaft dargestellten Vermittlungseinrichtungen VLR/MSC, GMSC verbunden ist. Beide Vermittlungseinrichtungen VLR/MSC, GMSC enthalten als ein Untersystem eine Dienstevermittlungseinheit M-SSP1, M-SSP2. Die Vermittlungseinrichtung VLR/MSC des momentanen Anschlusses des mobilen Teilnehmers A, B enthält weiterhin ein Besuchsregister VLR, solange sich der mobile Teilnehmer im Einzugsbereich dieser Vermittlungseinrichtung VLR/MSC befindet.

Vom mobilen Teilnehmer A abgehende Verbindungsaufbaumeldungen werden in der Vermittlungseinrichtung VLR/MSC, in deren Einzugsbereich sich der mobile Teilnehmer A befindet, zuerst verarbeitet. Dort ist die Abfrage von zusätzlichen Diensten SS (insbesondere sogenannte anbieterspezifische Dienste OSS) zu veranlassen. Für den mobilen Teilnehmer B ankommende Rufe, beispielhaft wird hier angenommen, daß diese aus dem Festnetz PSTN die Vermittlungseinrichtung GMSC des Netzübergangs erreichen, müssen in dieser Vermittlungseinrichtung GMSC des Netzübergangs bearbeitet werden und dort die innerhalb des Mobilfunknetzes GSM oder in anderen Netzen PSTN mit denen entsprechende Abkommen bestehen, zur Verfügung stehende zusätzliche Dienste SS nachgefragt werden.

Eine Speichereinheit HLR, VLR stellt das Heimatregister HLR bzw. Besucherregister VLR des mobilen Kommunikationssystems GSM dar. Diese Speichereinheit HLR, VLR enthält zusätzliche Informationen über zusätzliche Dienste SS, für die der Teilnehmer A, B registriert ist, wobei Informationen (CSI) zu den zusätzlichen Diensten SS über ein Location Update in das Besucherregister VLR gelangen. Diese zusätzlichen Informationen sind dabei zusätzlich zu Teilnehmerdaten eines Teilnehmers A, B, z.B. in Tabellenform einem Teilnehmer A, B zugeordnet. Die zusätzlichen Informationen können Angaben über mehrere zusätzliche Dienste SS enthalten. Die Administrierung und Inanspruchnahme von zusätzlichen Diensten SS soll anhand der weiteren Figuren erläutert werden.

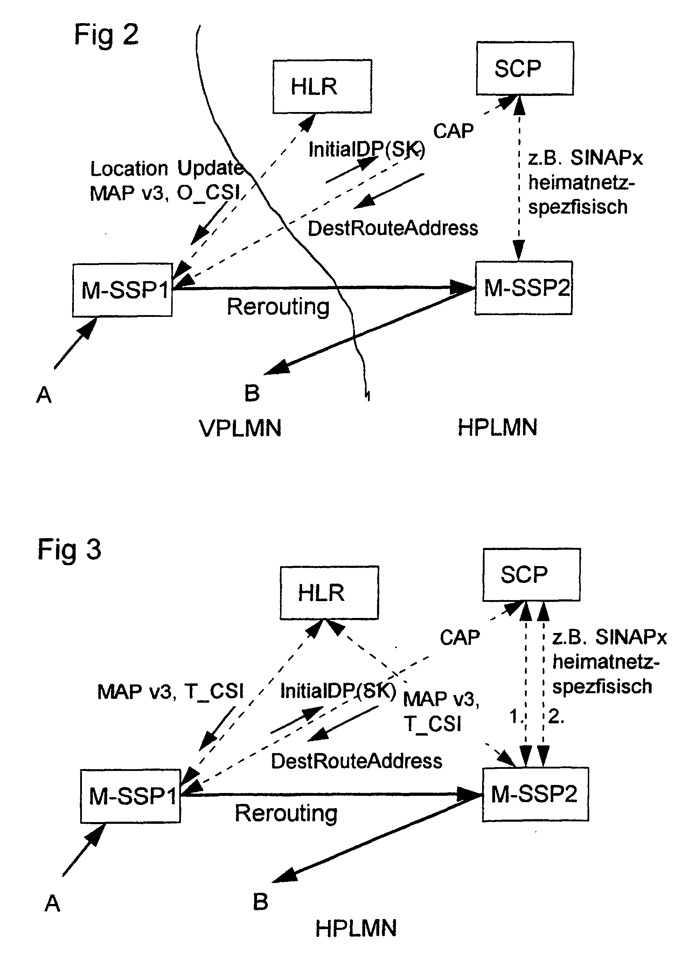

Die FIG 2 bis 4 zeigen Grundkonstellationen für den Ablauf des erfindungsgemäßen Verfahrens. In FIG 2 werden während eines Location Updates von einem Teilnehmer A die Teilnehmerdaten CSI aus dem Heimatregister HLR unter Verwendung eines MAP v3 Protokolls in das Besucherregister VLR beim ersten Dienstevermittlungseinheit M-SSP1 übertragen. Ist der Teilnehmer A für abgehende Gespräche für den zusätzlichen Dienst SS registriert wird zusätzlich eine diesbezügliche Teilnehmerinformation O_CSI übertragen und im Besucherregister VLR gespeichert und bei Einleitung eines abgehenden Gespräches durch den Teilnehmer A von der Dienstevermittlungseinheit M-SSP1 ausgewertet. Bei dieser Auswertung wird bestimmt, welche Dienstesteuerungseinheit den zusätzlichen Dienst SS anbietet. Zu dieser Dienstesteuerungseinheit SCP erfolgt eine Signalisierung mit einer initiierenden Nachricht InitialPD über ein Protokoll CAP, die einen Serviceschlüssel SK zu dem zusätzlichen Dienst SS enthält.

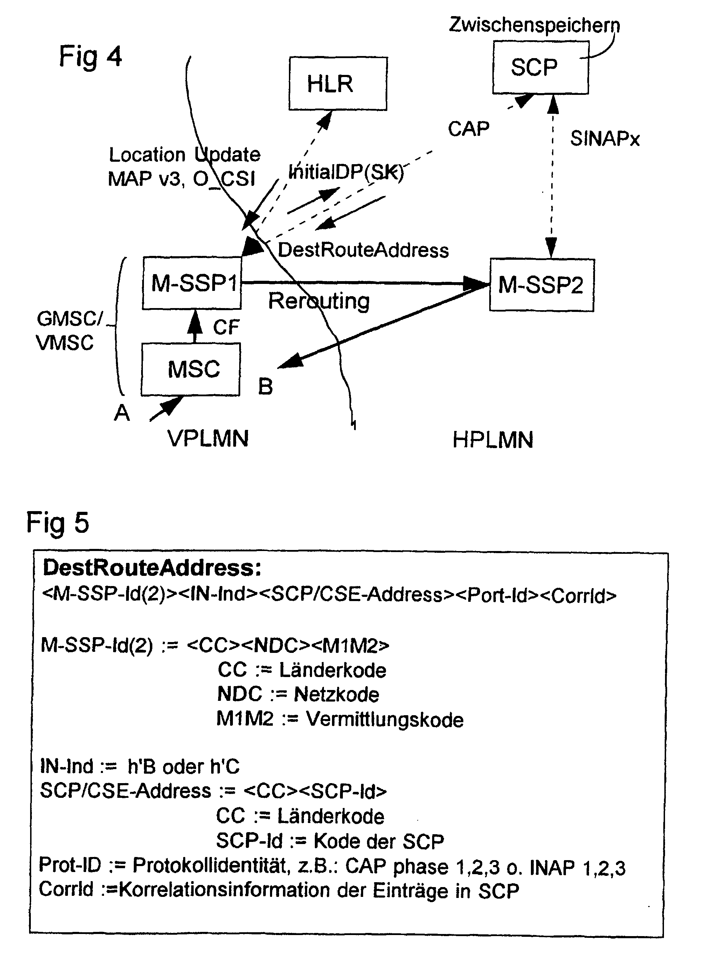

Unterstützt die erste Dienstevermittlungseinheit M-SSP1 nicht das für den zusätzlichen Dienst SS benötigtes Protokoll 2P, dann bestimmt die Dienstesteuerungseinheit SCP eine zweite Dienstevermittlungseinheit M-SSP2, die dies vermag, und sendet an die erste Dienstevermittlungseinheit M-SSP1 eine Nachricht, welche eine neue Zielnummer (DestRouteAddress) gemäß FIG 5 enthält. Basierend auf dieser Rerouting Information DestRouteAddress wird ein Verbindungsaufbau zur zweiten Dienstevermittlungseinheit M-SSP2 eingeleitet, die daraufhin über das benötigte heimatnetzspezifische oder dienstespezifische Protokoll 2P, beispielsweise ein SINAPx Protokoll, mit der Dienstesteuerungseinheit SCP den zusätzlichen Dienst SS dem Teilnehmer A zur Verfügung stellt und die Verbindung zum gerufenen Teilnehmer B herstellt.

Bei dieser Konstellation ist der rufende Teilnehmer A in seinem Heimatnetz HPLMN für einen zusätzlichen Dienst SS registriert, der auch nur dort angeboten und mit dem entsprechenden Protokoll 2P von einer Dienstevermittlungseinheit M-SSP2 unterstützt wird. Diesen Dienst SS kann er auch in einem Fremdnetz VPLMN nutzen.

Die FIG 3 und 4 beschreiben leicht abgewandelte Konstellationen für ankommende Gespräche. Nach FIG 3 handelt es sich um ein einziges Netz HPLMN, in dem ein Rerouting durchgeführt wird, da nicht alle Dienstevermittlungseinheit M-SSP1, 2 das für den zusätzlichen Dienst SS benötigte Protokoll zur Verfügung stellen. Das Reroutin für den in FIG 3 dargestellten Fall würde jedoch in gleicher Weise funktionieren, wenn sich beide Dienstevermittlungseinheiten M-SSP1 und M-SSP2 in unterschiedlichen Netzen ligen. Der zusätzliche Dienst SS betrifft den gerufenen Teilnehmer B. Durch eine Abfrage in dessen Heimatregister HLR werden der ersten Dienstevermittlungseinheit M-SSP1 Angaben T_CSI über den von ihm angeforderten zusätzlichen Dienst SS zur Verfügung gestellt, worauf wie oben die Signalisierung mit der Dienstesteuerungseinheit SCP und das Rerouting stattfindet. Die zweite Dienstesteuerungseinheit M-SSP2 erhält zuerst über einen ersten Dialog mit der Dienstesteuerungseinheit SCP die Teilnehmerrufnummer MSISDN des gerufenen Teilnehmers B und folgend ebenfalls die teilnehmerspezifischen Angaben T_CSI über den zusätzlichen Dienst SS vom Heimatregister HLR des gerufenen Teilnehmers B, und kann über einen zweiten Dialog mit der Dienstesteuerungseinheit SCP diesen Dienst SS dem gerufenen Teilnehmer B anbieten.

FIG 4 beschreibt den Fall, daß für den gerufenen Teilnehmer B eine Rufweiterleitung CF über die Vermittlungseinrichtung MSC und die erste Dienstevermittlungseinheit M-SSP1 bedient wird. Bei einer Registrierung eines abgehenden zusätzlichen Dienstes SS würde zusätzlich vom Heimatregister HLR eine zusätzliche Teilnehmerinformation O_CSI zur Verfügung gestellt (während Location Update oder während einer Abfrage des Heimatregisters HLR). Das Anbieten des zusätzlichen Dienstes SS erfolgt hier wiederum über die Grenze zweier Netze HPLMN, VPLMN hinweg. Die Behandlung des zusätzlichen Dienstes SS ist der bei abgehenden Gesprächen vergleichbar.

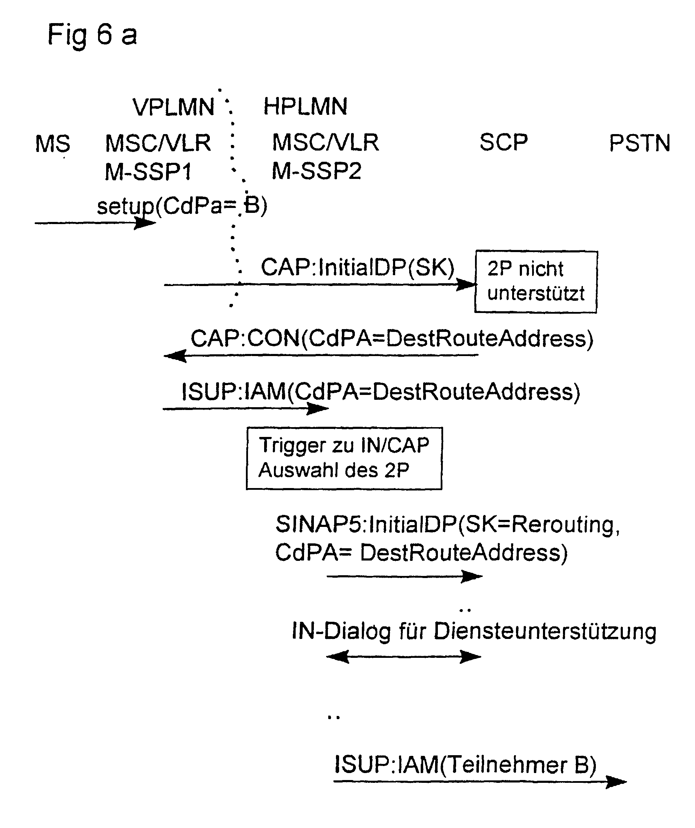

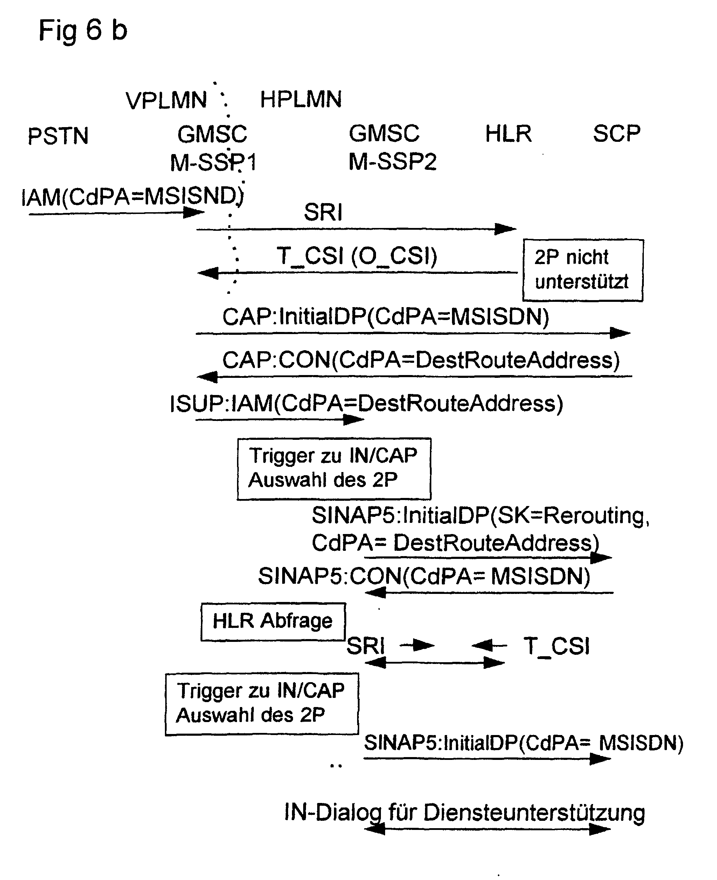

Beim Gesprächsaufbau nach FIG 6a geht dieser vom mobilen Teilnehmer A über die Mobilstation MS (Kommunikationsendgerät) aus. Die Verbindungsaufbaumeldung setup erreicht die Vermittlungseinrichtung VMSC/M-SSP1 eines fremden Netzes VPLMN, in deren Einzugsbereich sich die Mobilstation MS befindet. In der Vermittlungseinrichtung VMSC/M-SSP1 wird bei einem aktivierten zusätzlichen Dienst SS die zugehörige teilnehmerspezifische Information O_CSI vom Besucherregister VLR zur Verfügung gestellt. Ist dies nicht der Fall, erfolgt der Gesprächsaufbau ohne Inanspruchnahme von zusätzlichen Diensten SS.

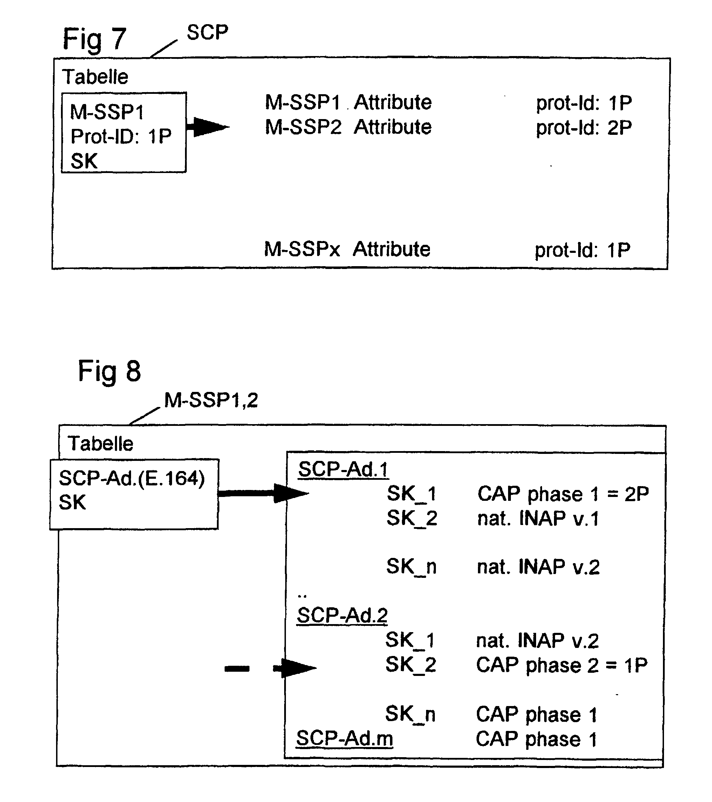

Ist ein zusätzlicher Dienst SS aktiviert, so wird durch die erste Dienstevermittlungseinheit M-SSP1 aus den zusätzlichen Informationen des Besuchsregisters VLR (O_CSI) bezüglich des rufenden Teilnehmers A die Adresse SCP-Ad. der Dienstesteuerungseinheit SCP für den zusätzlichen Dienst SS und für der Diensteschlüssel SK zur Bezeichnung des Dienstes SS bestimmt. Bei mehreren konkurrierenden zusätzlichen Diensten SS ist innerhalb der zusätzlichen Informationen eine Priorisierung vorzusehen, z.B. anhand eines Preisvergleiches oder des Zeitpunkts der Aktivierung. Anhand der Bezeichnung SCP-Ad. der Dienstesteuerungseinheit SCP und des Diensteschlüssels SK wird entsprechend FIG 8 das zu verwendende Protokoll protID=1P ausgewählt.

Die in FIG 8 dargestellte Auswahlmöglichkeit muß nicht in allen Dienstevermittlungseinheiten M-SSP1, M-SSP2 vorhanden sein. Wird nur ein Protokoll (CAP phase 1) angeboten, kann der Vergleich entfallen. Diese Auswahlmöglichkeit nach der Tabelle kann Schritt für Schritt in den Dienstevermittlungseinheiten M-SSP1, M-SSP2 nachgerüstet werden. Durch die Tabellenabfrage werden Verhandlungen über das zu verwendende Protokoll zwischen dem Dienstevermittlungseinheiten M-SSP1, M-SSP2 und dem Heimatregister HLR bzw. der Dienstesteuerungseinheit SCP vermieden und Signalisierungsaufwand eingespart. Diese dezentrale Lösung vermeidet komplexe Datenbanken im Heimatregister HLR bzw. der Dienstesteuerungseinheit SCP und kann dezentral im Sinne eines Migrationskonzeptes im Netz KN eingeführt werden.

Nach dem Verfahren entsprechend FIG 6a wurde für die Signalisierung zur Dienstesteuerungseinheit SCP ein Protokoll 1P ausgewählt. Von der ersten Dienstevermittlungseinheit M-SSP1 wird eine Signalisierung nach dem Protokoll (CAMEL application part) CAP mit einer initiierenden Nachricht InitialDP enthaltend den Serviceschlüssel SK zur der den zusätzlichen Dienst SS anbietenden Dienstesteuerungseinheit SCP eingeleitet. Die Dienstesteuerungseinheit SCP entnimmt dieser Signalisierung den Diensteschlüssel SK und die Identität der ersten Dienstevermittlungseinheit M-SSP1.

Gemäß FIG 7 findet nun in der Dienstesteuerungseinheit SCP ein Vergleich des für die Signalisierung mit der ersten Dienstevermittlungseinheit M-SSP1 gewählten Protokolls 1P mit dem für den zusätzlichen Dienst SS benötigten Protokoll 2P statt. Das benötigte Protokoll 2P läßt sich aus dem Serviceschlüssel SK herleiten, währenddessen sich der Protokoll 1P aus der vorangegangenen Signalisierung mit der ersten Dienstevermittlungseinheit M-SSP1, z.B. dem Anwendungskontext der Transportschicht, ergibt.

Wird festgestellt, daß die erste Dienstevermittlungseinheit M-SSP1 das benötigte Protokoll 2P für den gewünschten zusätzlichen Dienst SS nicht unterstützt (wird eine neuere, abwärtskompatible, den zusätzlichen Dienst unterstützende Protokollversion festgestellt, ist dies nicht der Fall), so wird eine, die zweite Dienstevermittlungseinheit M-SSP2 mit Hilfe der Tabelle aus FIG 7 ausgewählt, die das benötigte Protokoll 2P unterstützt und zusätzlich zur ersten Dienstevermittlungseinheit M-SSP1 räumlich oder durch vertragliche Vereinbarungen nahegelegen ist. Die Beziehung leitet sich aus den Attributen für die einzelenen Dienstevermittlungseinheiten M-SSP1, M-SSP2 und M-SSPn her.

Diese Beziehung kann durch entsprechende Abkommen zwischen verschiedenen Netzbetreibern, durch die technischen Gegebenheiten, z.B. Untermenge der Dienstevermittlungseinheiten M-SSP1, M-SSP2 eines Herstellers, regionalen oder Kostengesichtspunkten definiert sein.

Entsprechend der Identität M-SSP-Id(2) der zweiten Dienstevermittlungseinheit M-SSP2 wird nun eine Rerouting Information DestRouteAddress aufgebaut und mit einer Nachricht CON an die erste Dienstevermittlungseinheit M-SSP1 übersendet. Der beschriebene Auswahlprozess wird von einer Steuereinrichtung SE der Dienstesteuerungseinheit SCP geführt. Gleichzeitig werden die mit der initiierenden Nachricht InitialDP empfangenen Daten in einer Speichereinrichung SP, die auch die Tabelleneinträge enthält, gespeichert.

Der Aufbau der Rerouting Information DestRouteAddress wird in FIG 5 verdeutlicht. Die Identität-M-SSP-Id(2) der zweiten Dienstevermittlungseinheit M-SSP2, bestehend aus Länder- CC, Netz- NDC und Vermittlungskode M1M2, ein Indikator IN-Ind für das Rerouting des zusätzlichen Dienstes SS im Sinne eines intelligenten Netzes IN, eine Adresse SCP/CSE-Address der Dienstesteuerungseinheit SCP, bestehend aus Länderkode CC und Dienstesteuerungseinheitsidentität SCP-Id, eine Protokollidentität Prot-Id=2P, und eine Korrelationsinformation CorrId werden hierbei zusammengefaßt. Der Indikator IN-Ind wird vorteilhafterweise aus den nicht wählbaren Zeichenvorrat, z.B. hexadezimal h'B oder h'C ausgewählt.

Die erste Dienstevermittlungseinheit M-SSP1 führt das Rerouting mit einer Zwischenamtssignalisierung, z.B. nach ISUP oder TUP, durch und baut eine Verbindung zur zweiten Dienstevermittlungseinheit M-SSP2 mit einer Nachricht ISUP:IAM auf. Im weiteren ist die erste Dienstevermittlungseinheit M-SSP1 lediglich Transitknoten. Deren Verbindung zur Dienstesteuerungseinheit SCP wird abgebaut.

Nach dem erfolgreichen Rerouting wird wiederum anhand der Bezeichnung SCP-Ad. der Dienstesteuerungseinheit SCP und des Serviceschlüssels SK ein Protokoll ProtID=2P ausgewählt, das in diesem Fall den zusätzlichen Dienst SS unterstützen kann. Zwischen der zweiten Dienstevermittlungseinheit M-SSP2 und der Dienstesteuerungseinheit SCP findet, beispielsweise nach einem SINAP5 Protokoll 2P, ein Dialog entsprechend der Vorgehensweise in intelligenten Netzen IN statt. Die zweite Dienstevermittlungseinheit M-SSP2 übermittelt dabei die empfangene Zielrufnummer des gerufenen Teilnehmers B und einen Serviceschlüssel SK, der das Rerouting anzeigt. Dies erleichtert der Dienstesteuerungseinheit SCP die Dienstabwicklung

Aufgrund der in diesem Dialog kommunizierten Korrelationsinformation CorrId und der Identität der zweiten Dienstevermittlungseinrichtung M-SSP-Id(2) findet die Dienstesteuerungseinheit SCP die Zuordnung zu den zuvor gespeicherten Daten. Der Vergleich zwischen dem von der zweiten Dienstevermittlungseinheit M-SSP2 angebotenen Protokoll 2P und dem benötigten Protokoll 2P ist diesmal erfolgreich, worauf der zusätzliche Dienst SS durchgeführt wird. Der weitere Ablauf ist abhängig von den Besonderheiten des jeweiligen zusätzlichen Dienstes SS. Die Verbindung zum gerufenen Teilnehmer B wird aufgebaut.

Die Steuereinrichtung SE der Dienstesteuerungseinheit SCP überwacht eine Zeitschaltung bezüglich der Korrelationsinformation CorrId. Wird bis zur Signalisierung zwischen der zweiten Dienstevermittlungseinheit M-SSP2 und der Dienstesteuerungseinheit SCP eine Zeitdauer überschritten, dann werden die zur dieser Korrelationsinformation CorrId gehörigen Einträge gelöscht. Der zusätzliche Dienst SS kann für diesen Verbindungswunsch dann nicht mehr genutzt werden.

FIG 6b zeigt einen ankommenden Ruf. Der Ablauf des Verbindungsaufbaus weist daher die entsprechenden Besonderheiten gegenüber FIG 6a auf. Insbesondere die Abfrage des Heimatregisters HLR und das Routing sind entsprechend ausgebildet.

## Patentansprüche

1. Verfahren zur Administrierung zusätzlicher Dienste (SS) in einem Kommunikationsnetz (KN)
- mit vernetzten Vermittlungseinrichtungen (GMSC, VLR/MSC), an die über weitere Einrichtungen (BS) den Zugang von Teilnehmern (A, B) ermöglichende Kommunikationsendgeräte (MS) anschließbar sind und/oder über die Übergänge zu mindestens einem weiteren Netz (PSTN) bewirkt werden können,
- mit zumindest einer Dienstevermittlungseinheit (M-SSP1, M-SSP2), und
- mit zumindest einer den jeweiligen zusätzlichen Dienst (SS) steuernden Dienstesteuerungseinheit (SCP),
bei dem
- durch die Dienstesteuerungseinheit (SCP) eine initiierende Nachricht (InitialDP) von einer dem Teilnehmer (A,B) bedienenden ersten Dienstevermittlungseinheit (M-SSP1) empfangen wird,
- ein Vergleich eines durch die erste Dienstevermittlungseinheit (M-SSP1) unterstützen Protokolls (1P) mit einem für den zusätzlichen Dienst (SS) notwendigen Protokoll (2P) durchgeführt wird, und
abhängig vom Vergleichsergebnis:
- eine zweite Dienstevermittlungseinheit (M-SSP2) bestimmt wird, die das für den zusätzlichen Dienst (SS) notwendige Protokoll (2P) unterstützen kann, und
- ein Rerouting zu der zweiten Dienstevermittlungseinheit (M-SSP2) durchgeführt wird.

2. Verfahren nach Anspruch 1, bei dem
der Teilnehmer (A) der rufende Teilnehmer ist.

3. Verfahren nach Anspruch 2, bei dem
die erste Dienstevermittlungseinheit (M-SSP1) durch eine Rufweiterleitung (CF) ausgewählt wurde.

4. Verfahren nach Anspruch 1, bei dem
der Teilnehmer (B) der gerufene Teilnehmer ist.

5. Verfahren nach einem der vorhergehenden Ansprüche, bei dem in der Dienstesteuerungseinheit (SCP) Angaben über das für den zusätzlichen Dienst benötigte Protokoll (2P) gespeichert sind, durch die die zweite Dienstevermittlungseinheit (M-SSP2) ausgewählt wird.

6. Verfahren nach Anspruch 5, bei dem
in der Dienstesteuerungseinheit (SCP) weiterhin Angaben zu mehreren Dienstevermittlungseinheiten (M-SSP1, M-SSP2) gespeichert sind, die die dort zur Verfügung stehenden Protokolle und weitere Attribute bezeichnen.

7. Verfahren nach einem der vorhergehenden Ansprüche, bei dem als zweite Dienstevermittlungseinheit (M-SSP2) eine Dienstevermittlungseinheit (M-SSP2) ausgewählt wird, die in einem bestimmten Verhältnis zur ersten Dienstevermittlungseinheit (M-SSP1) steht.

8. Verfahren nach Anspruch 7, bei dem
zur Auswahl der zweiten Dienstevermittlungseinheit (M-SSP2) ein Diensteschlüssel (Service Key) für den zusätzlichen Dienst (SS) bzw. eine Protokollidentität (ProtID) und eine Adresse der ersten Dienstevermittlungseinheit (M-SSP1) benutzt wird, so daß mit Hilfe einer Tabelle eine zweite Dienstevermittlungseinheit (M-SSP2) bestimmt wird, die der ersten Dienstevermittlungseinheit (M-SSP1) nahe liegt.

9. Verfahren nach einem der vorhergehenden Ansprüche, bei dem die Verbindung zwischen der ersten Dienstevermittlungseinheit (M-SSP1) und der Dienstesteuerungseinheit (SCP) nach dem Vergleich abgebaut wird.

10. Verfahren nach einem der vorhergehenden Ansprüche, bei dem für das Rerouting eine Routingadresse (DestRoutingAddresse) erstellt wird, die:
- eine Adresse (M-SSP-Id(2)) der zweiten Dienstevermittlungseinheit (M-SSP2),
- einen Indikator (IN-Ind) für das Rerouting des zusätzlichen Dienstes (SS),
- eine Adresse (SCP/CSE-Address) der Dienstesteuerungseinheit (SCP), und
- eine Protokollidentität (ProtId)
enthält.

11. Verfahren nach Anspruch 10, bei dem
in der Dienstesteuerungseinheit (SCP) Angaben zu dem vom Teilnehmer (A,B) angeforderten zusätzlichen Dienst (SS) gespeichert werden, die durch eine Korrelationsinformation (CorrId) bezeichnet sind, und
die Korrelationsinformation (CorrId) in der Routingadresse (DestRoucingAddresse) übertragen wird.

12. Verfahren nach einem der vorhergehenden Ansprüche, bei dem in der Dienstesteuerungseinheit (SCP) eine Zeitschaltung enthalten ist, die für eine vorgebbare Zeit dem Verbindungsaufbau mit der zweiten Dienstevermittlungseinheit (M-SSP2) erwartet.

13. Verfahren nach einem der vorhergehenden Ansprüche, bei dem in der Dienstevermittlungseinheit (M-SSP2, M-SSP2) anhand eines Diensteschlüssels (SK) und einer Adresse (SCP-Ad.) der Dienstesteuerungseinheit (SCP) ein Protokoll (1P, 2P) für eine Signalisierung zur Dienstesteuerungseinheit (SCP) ausgewählt wird.

14. Verfahren nach einem der vorhergehenden Ansprüche, bei dem die erste und zweite Dienstevermittlungseinheit (M-SSP1, M-SSP2) unterschiedlichen Kommunikationsnetzen (KN) angehören.

15. Verfahren nach einem der vorhergehenden Ansprüche, bei dem das Kommunikationsnetz (KN) als Mobilfunknetz (GSM) ausgebildet ist.

16. Dienstesteuerungseinheit (SCP) zum Steuern eines zusätzlichen Dienstes (SS)
für ein Kommunikationsnetz (KN)
- mit vernetzten Vermittlungseinrichtungen (GMSC, VLR/MSC), an die über weitere Einrichtungen (BS) den Zugang von Teilnehmern (A, B) ermöglichende Kommunikationsendgeräte (MS) anschließbar sind und/oder über die Übergänge zu mindestens einem weiteren Netz (PSTN) bewirkt werden können,
- mit zumindest einer Dienstevermittlungseinheit (M-SSP1, M-SSP2),
wobei die Dienstesteuerungseinheit (SCP)
eine Speichereinrichtung (SP) zum Speichern einer initiierenden Nachricht (InitialDP) von einer einem Teilnehmer (A,B) bedienenden ersten Dienstevermittlungseinheit (M-SSP1),
eine Steuereinrichtung (SE)
- zum Vergleichen eines von der ersten Dienstevermittlungseinheit (M-SSP1) unterstützen Protokolls (1P) mit einem für den zusätzlichen Dienst (SS) notwendigen Protokoll (2P),
- zum Bestimmen einer zweiten Dienstevermittlungseinheit (M-SSP2), die das für den zusätzlichen Dienst (SS) notwendige Protokoll (2P) unterstützen kann, und
- zum Erstellen von Routinginformation für ein Rerouting zu der zweiten Dienstevermittlungseinheit (M-SSP2).

17. Dienstevermittlungseinheit (M-SSP2) zum Vermitteln eines zusätzlichen Dienstes (SS)
für ein Kommunikationsnetz (KN)
- mit vernetzten Vermittlungseinrichtungen (GMSC, VLR/MSC), an die über weitere Einrichtungen (BS) den Zugang von Teilnehmern (A, B) ermöglichende Kommunikationsendgeräte (MS) anschließbar sind und/oder über die Übergänge zu mindestens einem weiteren Netz (PSTN) bewirkt werden können,
- mit zumindest einer Dienstesteuerungseinheit (SCP) gemäß Anspruch 16,
wobei die Dienstevermittlungseinheit (M-SSP2) derart ausgestaltet ist, daß
anhand eines Servicekodes (SK) und einer Adresse (SCP-Ad.) der Dienstesteuerungseinheit (SCP) ein Protokoll (1P, 2P) für eine Signalisierung zur Dienstesteuerungseinheit (SCP) ausgewählt wird.

## Claims

1. Method of administering supplementary services (SS) in a communications network (KN)
- having interconnected switching centres (GMSC, VLR/MSC), to which communication terminals (MS), permitting access by subscribers (A, B), can be connected via further equipment (BS) and/or via which gateways to at least one further network (PSTN) can be created,
- having at least one service switching unit (M-SSP1, M-SSP2), and
- having at least one service control unit (SCP), controlling the respective supplementary service (SS),
in which method
- initiating information (InitialDP) is received via the service control unit (SCP) from a first service switching unit (M-SSP1) serving the subscriber (A, B),
- a comparison of a protocol (1P) supported by the first service switching unit (M-SSP1) with a protocol (2P) necessary for the supplementary service (SS) is carried out, and
depending on the outcome of the comparison:
- a second service switching unit (M-SSP2) that can support the protocol (2P) necessary for the supplementary service (SS) is determined, and
- a rerouting to the second service switching unit (M-SSP2) is carried out.

2. Method according to Claim 1, in which the subscriber (A) is the calling subscriber.

3. Method according to Claim 2, in which the first service switching unit (M-SSP1) was selected by call forwarding (CF).

4. Method according to Claim 1, in which the subscriber (B) is the called subscriber.

5. Method according to one of the preceding claims, in which particulars on the protocol (2P) required for the supplementary service are stored in the service control unit (SCP) and are used as a basis for selecting the second service switching unit (M-SSP2).

6. Method according to Claim 5, in which there are also stored in the service control unit (SCP) particulars on a plurality of service switching units (M-SSP1, M-SSP2) that designate the protocols available there and further attributes.

7. Method according to one of the preceding claims, in which a service switching unit (M-SSP2) that is in a specific relationship with the first service switching unit (M-SSP1) is selected as the second service switching unit (M-SSP2).

8. Method according to Claim 7, in which a service key for the supplementary service (SS), or a protocol identity (ProtID), and an address of the first service switching unit (M-SSP1) are used for the selection of the second service switching unit (M-SSP2), so that with the aid of a table a second service switching unit (M-SSP2) close to the first service switching unit (M-SSP1) is determined.

9. Method according to one of the preceding claims, in which the connection between the first service switching unit (M-SSP1) and the service control unit (SCP) is cleared down after the comparison.

10. Method according to one of the preceding claims, in which, for the rerouting, a routing address (DestRouteAddress) is created, including:
- an address (M-SSP-Id(2)) of the second service switching unit (M-SSP2),
- an indicator (IN-Ind) for the rerouting of the supplementary service (SS),
- an address (SCP/CSE-Address) of the service control unit (SCP), and
- a protocol identity (ProtId).

11. Method according to Claim 10, in which particulars on the supplementary service (SS) requested by the subscriber (A, B) are stored in the service control unit (SCP) and are designated by correlation information (CorrId), and the correlation information (CorrId) is transmitted in the routing address (DestRouteAddress).

12. Method according to one of the preceding claims, in which in the service control unit (SCP) there is contained a timing circuit, which for a predeterminable time expects the connection setup with the second service switching unit (M-SSP2).

13. Method according to one of the preceding claims, in which a protocol (1P, 2P) for signalling to the service control unit (SCP) is selected in the service switching unit (M-SSP1, M-SSP2) on the basis of a service key (SK) and an address (SCP-Ad.) of the service control unit (SCP).

14. Method according to one of the preceding claims, in which the first and second service switching units (M-SSP1, M-SSP2) belong to different communications networks (KN).

15. Method according to one of the preceding claims, in which the communications network (KN) is designed as a mobile radio network (GSM).

16. Service control unit (SCP) for controlling a supplementary service (SS)
for a communications network (KN)
- having interconnected switching centres (GMSC, VLR/MSC), to which communication terminals (MS), permitting access by subscribers (A, B), can be connected via further equipment (BS) and/or via which gateways to at least one further network (PSTN) can be created, and
- having at least one service switching unit (M-SSP1, M-SSP2),
the service control unit (SCP) including
a memory device (SP) for storing initiating information (InitialDP) from a first service switching unit (M-SSP1) serving a subscriber (A, B), and
a controller (SC)
- for comparing a protocol (1P) supported by the first service switching unit (M-SSP1) with a protocol (2P) necessary for the supplementary service (SS),
- for determining a second service switching unit (M-SSP2) that can support the protocol (2P) necessary for the supplementary service (SS), and
- for creating routing information for rerouting to the second service switching unit (M-SSP2).

17. Service switching unit (M-SSP2) for switching a supplementary service (SS)
for a communications network (KN)
- having interconnected switching centres (GMSC, VLR/MSC), to which communication terminals (MS), permitting access by subscribers (A, B), can be connected via further equipment (BS) and/or via which gateways to at least one further network (PSTN) can be created, and
- having at least one service control unit (SCP) according to Claim 16, the service switching unit (M-SSP2) being designed in such a way that a protocol (1P, 2P) for signalling to the service control unit (SCP) is selected on the basis of a service code (SK) and an address (SCP-Ad.) of the service control unit (SCP).

## Revendications

1. Procédé pour la gestion de services supplémentaires (SS) dans un réseau de communication (KN) qui comprend :
- des dispositifs de communication (GMSC, VLR/MSC) raccordés en réseau, auxquels des terminaux de communication (MS) donnant l'accès à des abonnés (A, B) peuvent être raccordés par l'intermédiaire d'autres dispositifs (BS) et/ou par lesquels des transferts vers au moins un autre réseau (PSTN) peuvent être réalisés,
- au moins une unité de transmission de services (M-SSP1, M-SSP2), et
- au moins une unité de commande de services (SCP) commandant le service supplémentaire (SS) concerné,
dans lequel
- par l'intermédiaire de l'unité de commande de services (SCP), un message d'initialisation (initial DP) est reçu d'une première unité de transmission de services (M-SSP1) desservant l'abonné (A, B),
- une comparaison entre un protocole (1P) soutenu par la première unité de transmission de services (M-SSP1) et un protocole (2P) nécessaire pour le service supplémentaire (SS) est réalisée, et
en fonction du résultat de la comparaison :
- une deuxième unité de transmission de services (M-SSP2) qui peut soutenir le protocole (2P) nécessaire pour le service supplémentaire (SS) est définie, et
- un re-routage vers la deuxième unité de transmission de services (M-SSP2) est réalisé.

2. Procédé selon la revendication 1, dans lequel l'abonné (A) est l'abonné appelant.

3. Procédé selon la revendication 2, dans lequel la première unité de transmission de services (M-SSP1) est sélectionnée par un réacheminement (CF) de l'appel.

4. Procédé selon la revendication 1, dans lequel l'abonné (B) est l'abonné appelé.

5. Procédé selon l'une des revendications précédentes, dans lequel des données concernant le protocole (2P) nécessaires pour le service supplémentaire, et par lesquelles la deuxième unité de transmission de services (M-SSP2) est sélectionnée, sont conservées en mémoire dans l'unité de commande de services (SCP).

6. Procédé selon la revendication 5, dans lequel, dans l'unité de commande de services (SCP) sont conservées en outre des données concernant plusieurs unités de transmission de services (M-SSP1, M-SSP2), et qui désignent les protocoles qui y sont disponibles ainsi que d'autres attributs.

7. Procédé selon l'une des revendications précédentes, dans lequel une unité de transmission de services (M-SSP2) qui est en relation définie avec la première unité de transmission de services (M-SSP1) est sélectionnée comme deuxième unité de transmission de services (M-SSP2).

8. Procédé selon la revendication 7, dans lequel, pour la sélection de la deuxième unité de transmission de services (M-SSP2), on utilise une clé de service ("Service Key") du service supplémentaire (SS) ou une identification de protocole (protlD) et une adresse de la première unité de transmission de services (M-SSP1), de telle sorte qu'à l'aide d'un tableau soit déterminée une deuxième unité de transmission de services (M-SSP2) qui est située à proximité de la première unité de transmission de services (M-SSP1).

9. Procédé selon l'une des revendications précédentes, dans lequel la liaison entre la première unité de transmission de services (M-SSP1) et l'unité de commande de services (SCP) est supprimée après la comparaison.

10. Procédé selon l'une des revendications précédentes, dans lequel on établit pour le re-routage une adresse de routage (DestRouteAddress), qui contient :
- une adresse (M-SSPID(2) de la deuxième unité de transmission de services (M-SSP2),
- un indicateur (IN-IND) pour le re-routage du service supplémentaire (SS),
- une adresse (SCP/adresse CSE) de l'unité de commande de services (SCP) et
- une identification de protocole (protID).

11. Procédé selon la revendication 10, dans lequel des données concernant le service (SS) supplémentaire demandé par l'abonné (A, B) et qui sont désignées par une information de corrélation (corrID) sont conservées dans l'unité de commande de services (SCP), et
l'information de corrélation (corrID) étant transmise dans l'adresse de routage (DestRouteAddress).

12. Procédé selon l'une des revendications précédentes, dans lequel l'unité de commande de services (SCP) contient un circuit de temporisation qui attend pendant une durée prédéterminée l'établissement de la communication avec la deuxième unité de transmission de services (M-SSP2).

13. Procédé selon l'une des revendications précédentes, dans lequel un protocole (1P, 2P) pour une signalisation vers l'unité de commande de services (SCP) est sélectionné dans l'unité de transmission de services (M-SSP2, M-SSP2) à l'aide de la clé de service (SK) et d'une adresse (SCP-Ad.) de l'unité de commande de services (SCP).

14. Procédé selon l'une des revendications précédentes, dans lequel la première et la deuxième unités de transmission de services (M-SSP1, M-SSP2) appartiennent à des réseaux de communication (KN) différents.

15. Procédé selon l'une des revendications précédentes, dans lequel le réseau de communication (KN) est configuré comme réseau radio mobile (GSM).

16. Unité de commande de services (SCP) pour la commande d'un service supplémentaire (SS) pour un réseau de communication (KN) qui comprend :
- des dispositifs de communication (GMSC, VLR/MSC) raccordés en réseau, auxquels des terminaux de communication (MS) donnant l'accès à des abonnés (A, B) peuvent être raccordés par l'intermédiaire d'autres dispositifs (BS) et/ou par l'intermédiaire desquels des transferts vers au moins un autre réseau (PSTN) peuvent être réalisés,
- au moins une unité de transmission de services (M-SSP1, M-SSP2), l'unité de commande de services (SCP) comprenant
- un dispositif de mémoire (SP) pour conserver un message d'initialisation (initial DP) provenant d'une première unité de transmission de services (M-SSP1) desservant un abonné (A, B) et
- un dispositif de commande (SE)
- pour la comparaison d'un protocole (1P) soutenu par la première unité de transmission de services (M-SSP1) et d'un protocole (2P) nécessaire pour le service supplémentaire (SS),
- pour la détermination d'une deuxième unité de transmission de services (M-SSP2) qui peut soutenir le protocole (2P) nécessaire pour le service supplémentaire (SS) et
- pour établir des informations de routage en vue d'un re-routage vers la deuxième unité de transmission de services (M-SSP2).

17. Unité de transmission de services (M-SSP2) pour la communication d'un service supplémentaire (SS) pour un réseau de communication (KN) qui comprend :
- des dispositifs de communication (GMSC, VLR/MSC) raccordés en réseau, auxquels les terminaux de communication (MS) qui donnent l'accès à des abonnés (A, B) peuvent être raccordés par d'autres dispositifs (BS) et/ou par l'intermédiaire desquels des transferts vers au moins un autre réseau (PSTN) peuvent être réalisés,
- et au moins une unité de commande de services (SCP) selon la revendication 16,
l'unité de transmission de services (M-SSP2) étant configurée de telle sorte qu'à l'aide d'un code de service (SK) et d'une adresse (SCP-Ad.) de l'unité de commande de services (SCP) un protocole (1P, 2P) est sélectionné pour une signalisation vers l'unité de commande de services (SCP).
